# EUROPÄISCHE PATENTANMELDUNG

(11) **EP 1 217 716 A2**
(43) Veröffentlichungstag der Anmeldung: **26.06.2002**
(21) Anmeldenummer: 01130074.6
(22) Anmeldetag: 18.12.2001
(51) Int. Cl.: H02K 15/00

(54) **Ausrichtverfahren von Ankern**

(30) Priorität: 23.12.2000 DE 10064913
(71) Anmelder: SIEMENS AKTIENGESELLSCHAFT, 80333 München (DE)
(72) Erfinder: Lenz, Rainer, 36199 Rotenburg (DE)

(57) **Zusammenfassung**

Das Verfahren dient zur Ausrichtung von Ankern (12) zwischen zwei Stationen, wobei die Verlagerung mit Hilfe einer Aushebevorrichtung (26) erfolgt. Zur Vermeidung einer bisher notwendigen Zwischenstellung, in welcher die Ausrichtung erfolgte, wird vorgeschlagen, die Anker (12) in der Aushebevorrichtung (26) drehbar aufzunehmen und gegen wenigstens eine elastisch nachgiebige Lasche (38) zu bewegen. Nach dem Eingreifen der zunächst ausweichenden Lasche (38) erfolgt ein Ausrichten durch die elastisch federnde Lasche (38) in eine gewünschte Winkelstellung. Neben dem Zeitvorteil durch die wegfallende Zwischenposition ergibt sich auch eine erhebliche Vereinfachung der Betriebsmittel zur Durchführung des Verfahrens, die ebenfalls Gegenstand der Erfindung sind.

## Beschreibung

Die Erfindung befaßt sich mit einem Verfahren zum Ausrichten von aus auf einer Achse oder Welle montierten Statorpaketen bestehenden Ankern zwischen zwei Stationen, beispielsweise zwischen einer Transporteinrichtung und einer Endlage in einer Bearbeitungsstation, wobei die Anker mit Hilfe einer Aushebevorrichtung verlagert werden.

In Fertigungslinien für Elektromotoren werden Anker, d. h. Achsen mit bereits montierten Statorpaketen beispielsweise in Prismen an einer Transportkette weitertransportiert. In den einzelnen Fertigungsstationen werden die Anker aus den Prismen der Transportketten ausgehoben, wobei zum Bearbeiten in der jeweiligen Station die Anker unter Umständen in ihrer Drehwinkelstellung ausgerichtet werden müssen, die durch ihre Lage in den Prismen der Transportkette nicht vorgegeben ist. Durch das Ausrichten werden die Schlitze in den Statorpaketen in eine definierte Stellung gebracht, beispielsweise um in einer Station zur Teilesignierung den Anker in gewünschter Weise markieren zu können.Bisher ist es üblich, die Aushebevorrichtung nach dem Ausheben des Ankers aus dem Prisma der Transportkette in einer Zwischenposition anzuhalten und den Anker mit Hilfe einer Ausrichtklinge in seine gewünschte Drehwinkelstellung zu verdrehen.

Neben dem hohen Aufwand an Betriebsmitteln für die angetriebene Ausrichtklinge und den damit einhergehenden Kosten ist bei dieser bekannten Lösung auch der Zeitverlust durch das Anhalten in der Zwischenposition zu nennen, der eine Verlängerung der Taktzeiten bewirkt und damit die Abläufe in der Fertigungslinie behindert.

Die Aufgabe der vorliegenden Erfindung besteht darin, ein Verfahren zu schaffen, das eine Ausrichtung der Anker ohne wesentlichen Zeitverlust ermöglicht.

Erfindungsgemäß wird die Aufgabe durch ein Verfahren der eingangs beschriebenen Art gelöst, bei welchem die Anker in der Aushebevorrichtung drehbar aufgenommen und gegen wenigstens eine elastisch nachgiebige Lasche bewegt werden, wobei die Lasche ausweicht, bis sie in eine Ausnehmung in den Ankern eingreift, die nach dem Eingreifen durch die wenigstens eine elastisch federnde Lasche in eine gewünschte Winkelstellung ausgerichtet werden.

Der Vorteil des erfindungsgemäßen Verfahrens besteht darin, daß das Ausrichten des Ankers während seiner Bewegung in die Endlage erfolgt, so daß ein zeitaufwendiger Zwischenstop vor dem Erreichen der Endlage nicht erforderlich ist.

Zweckmäßigerweise taucht die wenigstens eine Lasche in einen Zwischenraum der Statorpakete ein, wobei vorzugsweise zwei Laschen paarweise symmetrisch angeordnet sind und die Anker mittig zwischen diesen bewegt werden. Die gewünschte Drehwinkelstellung des Ankers stellt sich bei einer solchen Anordnung dann ein, wenn beide Laschen in Ausnehmungen eingetaucht sind und sich eine Gleichgewichtslage des Ankers zwischen den beiden Laschen einstellt. Es ist auch denkbar, daß sich die wenigstens eine Lasche in der ausgerichteten Stellung an einem Endanschlag befindet.
Eine besonders bevorzugte Weiterbildung des Verfahrens sieht vor, daß die wenigstens eine Lasche als Schieber in einer Richtung im wesentlichen senkrecht zur Verlagerungsrichtung der Anker bewegt wird. Dabei kann einerseits der Anker mit seinen Statorpaketen die wenigstens eine Lasche durch seine Bewegung in die Bearbeitungsstation leicht aus ihrer Ruhelage bewegen und andererseits kann die wenigstens eine Lasche nach dem Eintauchen in die Ausnehmungen den Anker gut ausrichten.

Um einen möglichst geringen Drehwiderstand des in der Aushebevorrichtung aufgenommenen Ankers zu erreichen, ist es vorteilhaft, die Statorpakete auf zwei drehbaren Rollen in der Aushebevorrichtung aufzulagern, die in bestimmten Abstand zueinander angeordnet sind. Die während der Ausrichtbewegung mitlaufenden Rollen verursachen nur einen sehr geringen Reibwiderstand, wodurch ein sicherer und schneller Ausrichtvorgang erreicht wird.

Gegenstand der vorliegenden Erfindung ist auch eine Vorrichtung zur Durchführung des vorhergehend beschriebenen Verfahrens. Dabei ist erfindungsgemäß vorgesehen, daß die Vorrichtung eine Aushebevorrichtung zur drehbaren Aufnahme eines Ankers aufweist, die zwischen einer ersten Stellung und einer zweiten Stellung bewegbar ist, wobei im Bereich der zweiten Stellung wenigstens eine Lasche vorgesehen ist, die gegen eine zugehöriges elastisch nachgiebiges Element im wesentlichen senkrecht zur Bewegungsrichtung der Aushebevorrichtung beweglich ist.

Eine derartige Vorrichtung ermöglicht mit sehr geringem Aufwand an Teilen und ohne zusätzlichen Antrieb ein Ausrichten der Anker beim Verlagern in die zweite Stellung, die beispielsweise der Endlage in einer Bearbeitungsstation entspricht.

Vorzugsweise weist die Aushebevorrichtung ein Prisma zur drehbaren Auflagerung der Statorpakete der Anker auf, wobei die Prismen eine definierte Lage des Ankers bewirken und in Verbindung mit der Ausrichtung durch die wenigstens eine elastisch federnde Lasche in der Drehrichtung eine in allen Freiheitsgraden definierte Lage des Ankers in der Bearbeitungsstation erreicht wird.

Besonders vorteilhaft ist eine Vorrichtung, bei welcher das Prisma aus zwei in bestimmten Abstand zueinander angeordneten drehbaren Rollen besteht, die ein reibungsarmes Verdrehen des Ankers in der aufgelagerten Stellung ermöglichen und dadurch den Ausrichtvorgang erleichtern und beschleunigen.

Es hat sich gezeigt, daß eine besonders schnelle und zuverlässige Ausrichtung des Ankers mit einer bevorzugten Ausführungsform der Vorrichtung erreichbar ist, bei welcher zwei symmetrisch zur Bewegungsbahn des Ankers im Bereich der zweiten Stellung liegende Laschen vorgesehen sind.

Nachfolgend wird anhand der beigefügten Zeichnungen näher auf ein Ausführungsbeispiel der Erfindung eingegangen. Es zeigen:
- Fig. 1: eine schematische Ansicht einer Aushebevorrichtung in der Ausgangsstellung;
- Fig. 2: eine um 90° bezüglich Fig. 1 gedrehte Ansicht des Ankers in der Transportvorrichtung;
- Fig. 3: eine Seitenansicht kurz bevor der Anker seine Endstellung erreicht.

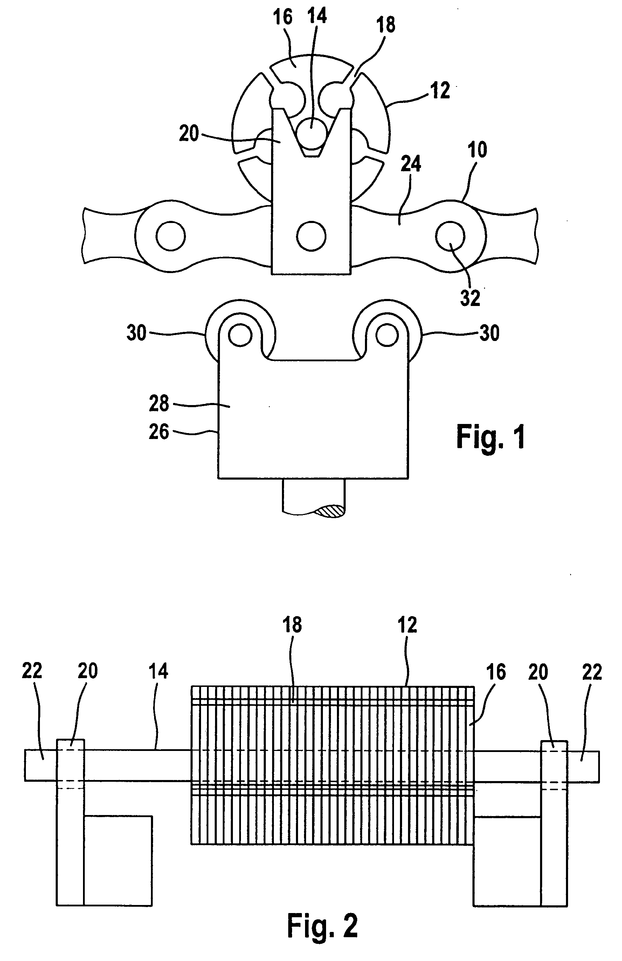

In Fig. 1 ist ein in einer Transportvorrichtung 10 gelagerter Anker 12 dargestellt, der aus auf einer Achse 14 vormontierten Statorpaketen 16 besteht, die über den Umfang verteilt mehrere Schlitze 18 aufweisen. Die Lagerung der Anker 12 in der Transportvorrichtung 10 erfolgt mit Hilfe von Prismen 20 (siehe auch Fig. 2), in welchen die Achsenden 22 der Achse 14 aufgelagert sind. Die beiden Prismen 20 sind an einem Glied 24 der ähnlich einer Kette aufgebauten Transportvorrichtung 10 befestigt.

Die Transportvorrichtung 10 ermöglicht das seitliche Verlagerung der Anker 12 beispielsweise aus einer vorhergehenden Bearbeitungsstation in den Bereich einer Aushebevorrichtung 26, die im wesentlichen aus einem Träger 28 und zwei in bestimmtem Abstand zueinander drehbar angeordneten Rollen 30 sowie einem nicht näher gezeigten Linearantrieb besteht, dessen Bewegungsrichtung im wesentlichen quer zur Bewegungsrichtung der Transportvorrichtung 10 liegt. Die Aushebevorrichtung 26 ist so dimensioniert, daß sie zwischen den Gelenkstellen 32 des Gliedes 24 und zwischen den Prismen 22 durch die Transportvorrichtung 10 greifen kann, wobei der Anker 12 mit den Statorpaketen 16 drehbar auf den Rollen 30 aufgelagert wird. Die beiden Rollen 30 haben dabei die gleiche Wirkung wie ein Prisma, so daß sich mit Ausnahme der Drehwinkelstellung bereits eine genau definierte Lage des Ankers 12 ergibt.

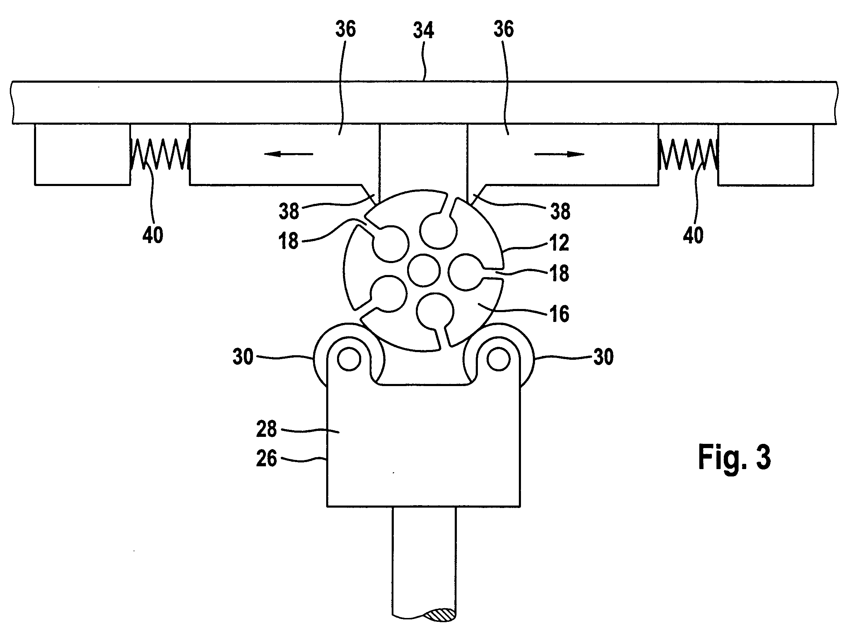

Da es für einige Bearbeitungsschritte, beispielsweise die Teilesignierung, notwendig ist, den Anker 12 vor dem Erreichen der Bearbeitungsstation auch in seine Drehwinkellage auszurichten, sind gemäß Fig. 3 im Bereich einer solchen Bearbeitungsstation 34 zwei symmetrische Schieber 36 mit Laschen 38 vorgesehen, die symmetrisch zur Bewegungsbahn des Ankers 12 während der Aushebebewegung angeordnet sind, wobei sie im wesentlichen senkrecht zur Bewegung des Ankers 12 gegen jeweils eine Rückstellfeder 40 verschiebbar sind.

In der in Fig. 3 dargestellten Position hat der durch die Aushebevorrichtung 26 aus der Transportvorrichtung 10 gehobene Anker 12 mit dem Umfang der Statorpakete 16 gerade die Laschen 38 erreicht. Durch die fortgesetzte Bewegung der Aushebevorrichtung 26 werden im weiteren Ablauf die Laschen 38 mit den Schiebern 36 gegen die Rückstellfedern 40 verschoben, wobei je nach Reibung an den beiden Kontaktstellen zwischen den Laschen 38 und dem Umfang der Statorpakete 16 bereits eine Drehbewegung des Ankers auftreten kann.

Nach dem Eintauchen der ersten Lasche 38 in einen Schlitz 18 übt der entsprechende Schieber 36 durch die vorgespannte Rückstellfeder 40 ein Drehmoment auf den Anker 12 aus, so daß sich spätestens dann eine Drehbewegung einstellt, bis beide Laschen 38 in jeweils einen Schlitz 18 in den Statorpaketen 16 eingetaucht sind. Ungefähr zu diesem Zeitpunkt erreicht auch die Aushebevorrichtung 26 ihre Endstellung.

Nach dem Einschnappen beider Laschen 38 stellt sich durch die Wirkung der Rückstellfedern eine definierte Mittellage des Ankers 12 ein, d. h. die Außenflächen der Statorpakete 16 zwischen den Schlitzen 18 befinden sich in einer definierten Lage, die beispielsweise das Anbringen einer Markierung durch eine Signiervorrichtung (nicht gezeigt) erlaubt.
Es ist u. U. denkbar, statt der paarweisen Anordnung von Schiebern nur einen Schieber mit einer zugehörigen Lasche vorzusehen, der nach dem Eintauchen der Lasche in einen Schlitz 18 durch die Wirkung der Rückstellfeder in eine bestimmte Position zurückverschoben wird, die durch einen Anschlag definiert ist. Die Lage und Anzahl der idealerweise vorzusehenden Schieber kann dabei von der Polzahl des Ankers 12, d. h. von der Anzahl vorhandener Schlitze in den Statorpaketen abhängig sein.

## Patentansprüche

1. Verfahren zum Ausrichten von aus auf jeweils einer Welle oder Achse (14) montierten Statorpaketen (16) bestehenden Ankern (12) zwischen zwei Stationen, beispielsweise zwischen einer Transporteinrichtung (10) und einer Endlage in einer Bearbeitungsstation (34), wobei die Anker (12) mit Hilfe einer Aushebevorrichtung (26) verlagert werden, **dadurch gekennzeichnet, daß** die Anker (12) in der Aushebevorrichtung (26, 30) drehbar aufgenommen und gegen wenigstens eine elastisch nachgiebige Lasche (38) bewegt werden, wobei die Lasche (38) ausweicht, bis sie in eine Ausnehmung (18) in den Ankern (12) eingreift, die nach dem Eingreifen durch die wenigstens eine elastisch federnde Lasche (38) in eine gewünschte Drehwinkelstellung ausgerichtet werden.

2. Verfahren nach Anspruch 1, **dadurch gekennzeichnet, daß** die wenigstens eine Lasche (38) in einen Zwischenraum (18) der Statorpakete (16) eintaucht.

3. Verfahren nach Anspruch 1 oder 2, **dadurch gekennzeichnet, daß** zwei Laschen (38) paarweise symmetrisch angeordnet sind und die Anker (12) mittig zwischen diesen verlagert werden.

4. Verfahren nach einem der Ansprüche 1 bis 3, **dadurch gekennzeichnet, daß** die wenigstens eine Lasche (38) an einem Schieber (36) in einer Richtung im wesentlichen senkrecht zur Verlagerungsrichtung der Anker (12) bewegt wird.

5. Verfahren nach einem der vorhergehenden Ansprüche, **dadurch gekennzeichnet, daß** die Anker (12) mit den Statorpaketen (16) auf zwei drehbaren Rollen (30) in der Aushebevorrichtung (26) aufgelagert werden, die in bestimmtem Abstand zueinander angeordnet sind.

6. Vorrichtung zur Durchführung des Verfahrens nach einem der vorhergehenden Ansprüche, **dadurch gekennzeichnet, daß** sie eine Aushebevorrichtung (26) zur drehbaren Aufnahme eines Ankers (12) aufweist, die zwischen einer ersten Stellung und einer zweiten Stellung bewegbar ist, wobei im Bereich der zweiten Stellung wenigstens eine Lasche (38) vorgesehen ist, die gegen ein zugehöriges elastisch nachgiebiges Element (40) im wesentlichen senkrecht zur Bewegungsrichtung der Aushebevorrichtung (26) beweglich ist.

7. Vorrichtung nach Anspruch 6, **dadurch gekennzeichnet, daß** die Aushebevorrichtung (26) ein Prisma zur Auflagerung der Statorpakete (16) des Ankers (12) aufweist.

8. Vorrichtung nach Anspruch 7, **dadurch gekennzeichnet, daß** das Prisma aus zwei in bestimmtem Abstand zueinander angeordneten drehbaren Rollen (30) besteht.

9. Vorrichtung nach einem der Ansprüche 6 bis 8, **dadurch gekennzeichnet, daß** zwei symmetrisch zur Bewegungsbahn des Ankers (12) im Bereich der zweiten Stellung liegende Laschen (38) vorgesehen sind.
